(19) Europäisches Patentamt / European Patent Office / Office européen des brevets

(11) **EP 3 527 955 A1**

(12) **DEMANDE DE BREVET EUROPEEN**

(43) Date de publication:
**21.08.2019 Bulletin 2019/34**

(51) Int Cl.:
***G01F 1/32*** *(2006.01)*

(21) Numéro de dépôt: **19156699.1**

(22) Date de dépôt: **12.02.2019**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(30) Priorité: **16.02.2018 FR 1851348**

(71) Demandeur: **L'AIR LIQUIDE, SOCIETE ANONYME POUR L'ETUDE ET L'EXPLOITATION DES PROCEDES GEORGES CLAUDE**
**75007 Paris (FR)**

(72) Inventeurs:
• **BOUCHER, Marianne**
**78350 Les Loges En Josas (FR)**
• **AMMOURI, Fouad**
**78350 Les Loges En Josas (FR)**
• **BONNETIER, Stéphane**
**78350 Les Loges En Josas (FR)**
• **LO JACONO, David**
**31000 Toulouse (FR)**

(74) Mandataire: **Pittis, Olivier**
**L'Air Liquide S.A.**
**75, quai d'Orsay**
**75321 Paris Cedex 07 (FR)**

(54) **DÉBITMÈTRE À OSCILLATION FLUIDIQUE À ÉLÉMENT STABILISATEUR DE FLUX AMÉLIORÉ**

(57)    L'invention porte sur un débitmètre à oscillation fluidique comprenant, agencés en série, une chambre de stabilisation (1) et une chambre d'oscillation (2) reliées fluidiquement l'une à l'autre par un canal de liaison (3), la chambre de stabilisation (1) comprenant un élément stabilisateur de flux (11) et la chambre d'oscillation (2) comprenant un élément à reflux (21) comprenant une partie de forme semi-cylindrique (22). L'élément stabilisateur de flux (11) comprend un corps d'élément (10) de section oblongue et présentant un premier et un deuxième plan de symétrie (P1, P2) perpendiculaires entre eux, ledit premier plan de symétrie (P1) étant selon la longueur (L) et ledit second plan de symétrie (P2) étant selon la largeur (1) dudit corps d'élément (10), et ledit corps d'élément (10) comprenant, en outre, deux extrémités (11a, 11b) de forme effilée (11c) et symétriques l'une de l'autre par rapport au deuxième plan de symétrie (P2).

FIG.1B

EP 3 527 955 A1

**Description**

L'invention concerne un débitmètre à oscillation fluidique comprenant une chambre de tranquillisation à géométrie améliorée.

Un débitmètre à oscillation fluidique ou DOF sert à mesurer le débit d'un flux de gaz à partir de la fréquence des oscillations de gaz qui s'y produisent. La fréquence des oscillations est en effet proportionnelle au débit du flux traversant le débitmètre.

Habituellement, un DOF comprend, en série, une chambre de tranquillisation, aussi appelée de stabilisation, servant à stabiliser le flux de gaz et une chambre d'oscillation où se produit l'instabilité que l'on cherche à mesurer, c'est-à-dire les oscillations fluidiques, lesquelles sont reliées fluidiquement l'une à l'autre par un canal d'amenée de fluide. La chambre de tranquillisation a généralement une section (quasi) triangulaire et comprend un élément stabilisateur de flux qui a généralement, lui aussi, une section triangulaire. Par ailleurs, la chambre d'oscillation comprend, quant à elle, un élément à reflux généralement de forme semi-cylindrique, face auquel sont générées les oscillations gazeuses, i.e., tourbillons de gaz oscillants.

Le principe de fonctionnement d'un tel débitmètre est notamment décrit par les documents : Y. Le Guer ; Jet confiné, dispersions fluide-particules et mélange chaotique ; Engineering Sciences ; Université de Pau et des Pays de l'Adour ; 2005*,* et WO-A-93/22627.

Les DOF sont utilisables dans le domaine industriel ou médical.

Ainsi, un DOF est utilisable en oxygénothérapie d'un patient à domicile. Dans ce cas, le débitmètre à oscillation fluidique est typiquement incorporé ou connecté à un dispositif de suivi ou d'observance, venant s'insérer entre la source de gaz, typiquement une source d'oxygène, et le patient, de manière à permettre de suivre les consommations d'oxygène par le patient et s'assurer ainsi que celui-ci observe bien son traitement, notamment via une télétransmission des données, par exemple à un serveur distant.

On peut aussi utiliser un DOF pour suivre la consommation de gaz distribué par une (ou des) prise murale de distribution de gaz d'un réseau de conduites de gaz agencé au sein d'un bâtiment hospitalier, industriel ou de recherche.

Dans les deux exemples précédents, il convient d'utiliser le DOF le plus compact possible afin dans le premier cas, d'assurer le confort du patient et, dans le second, de pouvoir s'insérer dans une prise murale de distribution de gaz.

Cependant, l'inclusion d'un DOF au sein d'un réseau de gaz va souvent engendrer des pertes de charge notables qui sont d'autant plus importantes que sa taille caractéristique est réduite.

Pour tenter de limiter ces pertes de charges, on pourrait simplement utiliser des géométries fines et effilées. Cependant, une telle solution ne serait pas adaptée au plan industriel car concevoir un DOF incluant des structures fines et complexes serait difficilement industrialisable, notamment par injection, qui est la technique classique de fabrication de DO, car il serait alors impossible de réaliser des canaux de moins de 0.8 mm de large et 4 mm de hauteur, qui sont des dimensionnements typiques au sein des DOF, notamment du canal reliant les chambres de stabilisation et d'oscillation du DOF.

En d'autres termes, du fait de contraintes techniques, il n'existe pas, à ce jour, de DOF de taille réduite, garantissant de bonnes performances fluidiques, en particulier des oscillations fluidiques mesurables sur une large plage de débits Q (Qmax =30 x Qmin), et par ailleurs une perte de charge minimale tout en respectant les contraintes d'industrialisation susmentionnées.

Afin de tenter d'améliorer les DOF, il a été testé des configurations particulières de chambre de tranquillisation. Ainsi, il a été observé qu'une structure générale en T de cette chambre conduit à de bonnes performances fluidiques mais augmente notablement la perte de charge.

De façon analogue, l'incorporation d'ailettes parallèles en tant qu'élément stabilisateur de flux dans la chambre de tranquillisation donnent de bonnes performances fluidiques mais complexifie énormément l'architecture de cette chambre en la rendant très difficilement industrialisable aux dimensions souhaitées.

En outre, on souhaite aussi pouvoir réaliser des DOF de plus grande taille sans avoir à en changer totalement l'architecture.

Le problème à résoudre est dès lors de proposer un DOF amélioré garantissant une stabilisation efficace du flux gazeux le traversant dans une large plage de débit, typiquement jusqu'à 15 sL/min (sL= litre standard), tout en engendrant des pertes de charges minimales et ne posant pas les problèmes d'industrialisation susmentionnés, en particulier un DOF de petites dimensions mais aussi, le cas échéant, un DOF de plus grande taille.

La solution de l'invention concerne alors un débitmètre à oscillation fluidique (ou DOF) comprenant, agencés en série, une chambre de stabilisation et une chambre d'oscillation reliées fluidiquement l'une à l'autre par un canal de liaison ayant une largeur (d), la chambre de stabilisation comprenant un élément stabilisateur de flux et la chambre d'oscillation comprenant un élément à reflux comprenant une partie de forme semi-cylindrique, caractérisé en ce que l'élément stabilisateur de flux comprend un corps d'élément de section oblongue et présentant un premier et un deuxième plan de symétrie (P1, P2) perpendiculaires entre eux, ledit premier plan de symétrie (P1) étant selon la longueur (L) et ledit second plan de symétrie (P2) étant selon la largeur (1) dudit corps d'élément, et ledit corps d'élément comprenant, en outre, deux extrémités de forme effilée et symétriques l'une de l'autre par rapport au deuxième plan de symétrie (P2), l'élément stabilisateur de flux et la paroi périphérique de la chambre de stabilisation étant séparés par des canaux de largeur (d), caractérisé en ce que :

- le corps d'élément de section oblongue a une longueur (L) et une largeur (1) telles que :

$$L > 2.5 \times l$$

- l'élément stabilisateur de flux a une longueur (L) comprise entre 1.8 mm et 300 mm, et une largeur comprise entre 1.8 mm et 200 mm, et la largeur (d) du canal de liaison et des canaux de la chambre de stabilisation est inférieure ou égale à 10 mm.

Selon le cas, l'invention peut comprendre l'une ou plusieurs des caractéristiques techniques suivantes :

- le premier plan de symétrie (P1) est selon l'axe longitudinal de l'élément stabilisateur de flux.
- le second plan de symétrie (P2) est selon l'axe transversal de l'élément stabilisateur de flux.
- les deux extrémités de forme effilée du corps d'élément présentent une largeur se réduisant progressivement.
- les deux extrémités de forme effilée du corps d'élément forment chacune une arête aiguë.
- le corps d'élément de section oblongue a une hauteur (e) comprise entre 0.8 mm et 70 mm.
- le corps d'élément de section oblongue comprend à chaque extrémité une arête aiguë ayant une hauteur (e).
- l'élément stabilisateur de flux est en matériau polymère ou métallique, par exemple polyoxyméthylène de type Delrin™.
- l'élément stabilisateur de flux est formé d'une pièce avec tout ou partie des parois délimitant la chambre de stabilisation, de préférence par moulage injection ou par impression 3D.
- l'élément stabilisateur de flux a une longueur (L) comprise entre 4.8 mm et 640 mm.
- on choisit la largeur (d) du canal de liaison reliant fluidiquement la chambre de stabilisation à la chambre d'oscillation et des canaux de la chambre de stabilisation en fonction des dimensions du DOF désiré, en particulier :

  • pour un DOF compact, la largeur (d) est préférentiellement inférieure ou égale à 1 mm,
  • pour un DOF de grandes dimensions, la largeur (d) est comprise entre 1 et 10 mm.

- la chambre d'oscillation comprend des orifices de mesure de pression reliés à des microphones ou au moins un capteur de pression, de préférence des microphones, de manière à pouvoir déterminer la fréquence des oscillations fluidiques se produisant dans ladite chambre d'oscillation.
- la profondeur (a), considérée selon le premier plan de symétrie (P1), de partie cylindrique de l'élément à reflux et la largeur, considérée perpendiculairement au premier plan de symétrie (P1), de partie cylindrique de l'élément à reflux sont telles que :

  • 0,8 mm < a < 25 mm, de préférence 1 mm < a < 2 mm et
  • 0,8 mm < b < 25 mm, de préférence 1 mm < b < 2 mm.

- la distance x entre les pieds de l'arche et les parois de la chambre d'oscillation leur faisant face est comprise entre 1.8 et 120 mm.

Par ailleurs, il de nombreuses applications ou d'intégrations possibles d'un DOF selon l'invention, par exemple :

- un dispositif médical de suivi ou d'observance d'un traitement d'oxygénothérapie.
- une prise de distribution de gaz fixée sur une paroi d'un bâtiment industriel ou hospitalier, un laboratoire notamment de recherche ou autre, à laquelle est habituellement un conduit ou un appareil consommant le gaz ou mélange gazeux distribué par la prise.
- un bloc détendeur de gaz agencé sur un récipient de gaz, telle une bouteille de gaz équipée ou non d'un capotage de protection, incorporant un DOF afin de mesurer le débit de gaz sortant.

L'invention va maintenant être mieux comprise grâce à la description détaillée suivante, faite à titre illustratif mais non limitatif, en référence aux Figures annexées parmi lesquelles :

- les Figures 1A et 1B sont des schémas du principe de fonctionnement d'un débitmètre à oscillation fluidique (DOF) selon l'invention,

- la Figure 2 est une représentation (partielle en 3D) du DOF de la Figure 1,
- la Figure 3 illustre sous forme de courbes comparatives, les pertes de charges en fonction du débit de gaz, mesurées en testant plusieurs configurations de DOF de l'art antérieur et le DOF selon l'invention des Figures 1 et 2,
- les Figures 4 et 5 sont des vues, respectivement, en coupe et partielle en trois dimensions d'un mode de réalisation d'un élément stabilisateur de flux incorporé au DOF selon l'invention des Figures 1 et 2, et
- la Figure 6 illustre plusieurs configurations de DOF selon l'art antérieur ayant été testées dans le cadre de la présente invention.

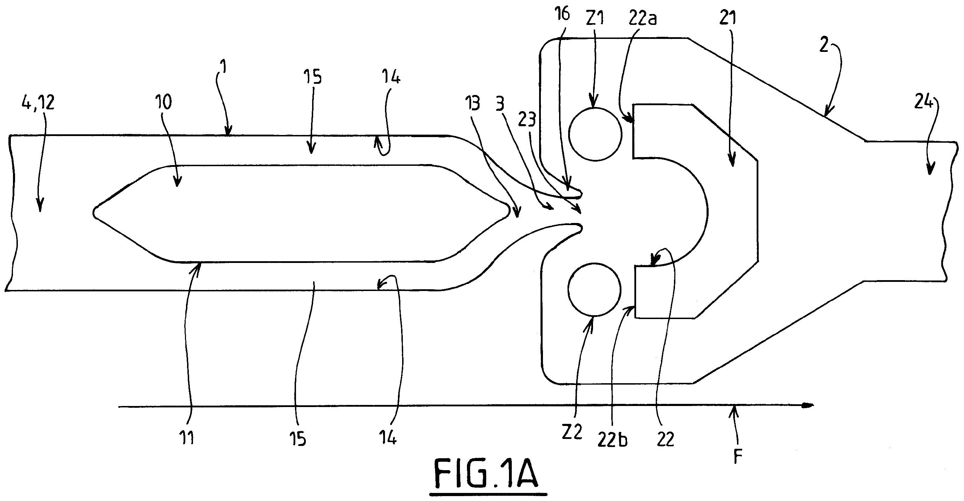

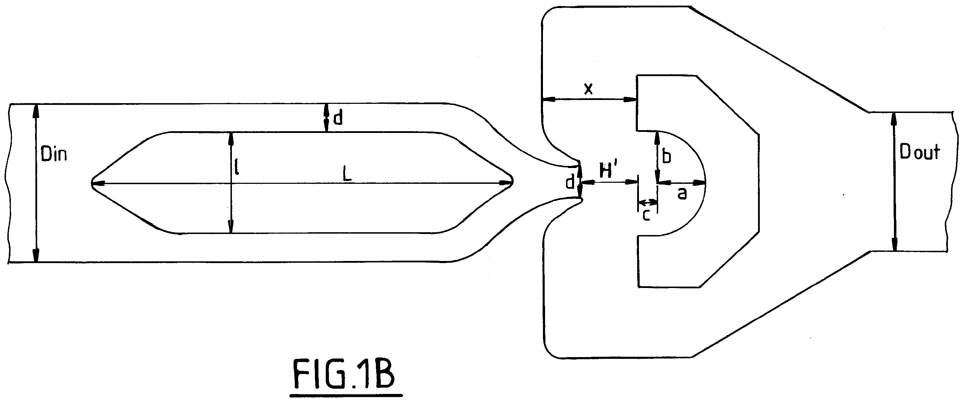

Les Figures 1A et 1B sont des représentations schématiques en coupe (vue de dessus) d'un mode de réalisation d'un débitmètre à oscillation fluidique ou DOF selon l'invention.

Il comprend, en série, une chambre de stabilisation 1, aussi appelée chambre de tranquillisation, dans laquelle est agencé un élément stabilisateur de flux 11, et une chambre d'oscillation 2, aussi appelée chambre à reflux, comprenant un élément à reflux 21 ayant une forme de demi-cylindre, lequel est configuré en arc de cercle 22 pour créer un tourbillon ou vortex gazeux oscillant. Le tourbillon oscille en fait entre deux zones Z1, Z2 situées schématiquement au niveau des extrémités 22a, 22b du demi-cylindre formant l'élément à reflux 21.

L'élément à reflux 21 est pris en sandwich entre deux parois parallèles (non montrés) délimitant la chambre d'oscillation 2 en haut et en bas respectivement, c'est-à-dire formant le plafond et le sol de la chambre d'oscillation 2.

Un conduit de liaison 3 relie fluidiquement la chambre de stabilisation 1 à la chambre d'oscillation 2 de sorte que le gaz qui entre dans la chambre de stabilisation 1, la traverse et alimente ensuite la chambre d'oscillation 2. Le conduit de liaison 3 y débouche en vis-à-vis, c'est-à-dire en face ou en regard, de l'élément à reflux 21 de forme semi-cylindrique, ce qui engendre une oscillation du flux à une fréquence d'oscillation proportionnelle au débit du flux, avec formation de tourbillons alternativement dans les deux zones Z1 et Z2 suscitées.

Afin d'assurer une mesure, en fonction du temps, des variations de pression du gaz au sein de la chambre d'oscillation 2 au sein de laquelle oscille le flux gazeux en formant les tourbillons gazeux dans les zones Z1, Z2, on prévoit par ailleurs des capteurs de pression ou des microphones reliés à deux orifices de mesure (non représentés) aménagés dans la paroi supérieure, c'est-à-dire dans le plafond, ou dans la paroi inférieure, c'est-à-dire dans le sol, de la chambre d'oscillation 2, c'est-à-dire approximativement au-dessus ou en-dessous des zones Z1, Z2 où se forment les tourbillons, et symétriquement par rapport au plan de symétrie du débitmètre en respectant impérativement entre eux, une distance (mesurée entre les axes ou centres des orifices de mesures comprise entre 0.5 et 15 mm, de préférence entre 0.5 et 10 mm, par exemple de l'ordre de 1 à 6 mm.

Préférentiellement, les deux orifices de mesure sont reliés à des microphones et/ou sont fermés par une membrane fluidiquement étanche de manière à assurer le bon fonctionnement des microphones. En fait, la pression dans la chambre d'oscillation 2 se transmet aux microphones, via les deux orifices, au travers des membranes qui recouvrent ces deux orifices. D

De préférence, la membrane a une épaisseur très fine au niveau des capteurs, typiquement de l'ordre de 50 à 500 $\mu$m environ, alors qu'ailleurs, son épaisseur peut être supérieure, par exemple comprise entre 1 et 2 mm, voire plus.

Le flux de gaz qui traverse le DOF, circule dans le sens de la flèche F représentée en Figure 1.

Plus précisément, le flux de gaz, par exemple de l'oxygène ou de l'air enrichi en oxygène, arrive par un canal d'entrée 4 relié fluidiquement à un orifice d'entrée 12 de la chambre de stabilisation 1, y pénètre via cet orifice d'entrée 12 et y est soumis à une stabilisation par l'élément stabilisateur de flux 11,

Le flux gazeux contourne l'élément stabilisateur de flux 11 en passant dans des passages 15 aménagés de part et d'autre de celui-ci. Les passages 15 sont en fait délimités par la surface externe de l'élément stabilisateur de flux 11 et par la paroi périphérique interne 14 de la chambre de stabilisation 1. En d'autres termes, l'élément stabilisateur de flux 11 est espacé d'une distance d (ici avec d compris entre 0.6 mm et 10 mm) de la paroi périphérique 14 de la chambre de stabilisation 1 de manière à créer des passages 15 pour le gaz autour dudit élément stabilisateur de flux 11, comme visible sur la Figure 1A. Le gaz est accéléré en passant de l'entrée 12 aux canaux 15 (i.e., accélération due à une restriction du passage), ce qui permet également une stabilisation. Cette stabilisation est très efficace car la largeur radiale des canaux 15 est fixe (i.e., égale à d) et leur courbe suivant la forme effilée de la forme 11 permet d'éviter la formation de points de décollement du fluide qui sont générateurs d'instabilités. Le fluide est ainsi stabilisé et guidé dans vers le canal 3 où il est encore accéléré pour ressortir dans la chambre d'oscillation 1 avec un profil de vitesse stabilisé. Il est primordial d'avoir le flux gazeux le plus stable possible en entrée de la chambre d'oscillation 1 pour s'assurer de la bonne survenue des oscillations et ce, quel que soit le débit. En effet, la présence d'instabilités en entrée de la chambre d'oscillation 1 peut favoriser un passage par rapport à l'autre. Le gaz va alors majoritairement passer d'un côté de l'obstacle 21 et majoritairement de l'autre côté, ne générant aucune oscillation entre ces deux passages possibles. La mesure d'un débit est alors impossible.

Grâce à l'invention, le flux gazeux ressort ensuite stabilisé de la chambre de stabilisation 1 par un orifice de sortie 13 et est acheminé par le conduit de liaison 3 qui relie fluidiquement la chambre de stabilisation 1 à un orifice d'entrée 23 de la chambre d'oscillation 2.

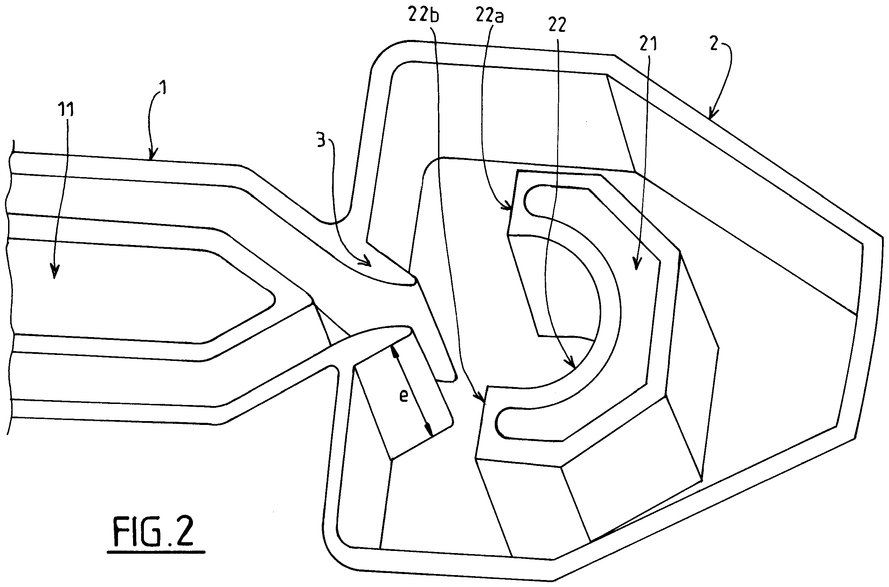

Le conduit de liaison 3 débouche dans la chambre d'oscillation 2 au niveau d'une partie d'embouchure formant un « bec » 16 se projetant légèrement au sein de la chambre d'oscillation 2, comme illustré en Figures 1 et 2.

Le flux qui pénètre dans la chambre d'oscillation 2, vient y impacter l'élément à reflux 21 de forme semi-cylindrique, ce qui crée des tourbillons oscillants entre les deux zones Z1 et Z2, comme expliqué ci-avant. Le gaz va ainsi alternativement passer de part et d'autre de l'élément à reflux 21 selon une fréquence dépendant du débit. Le gaz continue ensuite sa course dans la chambre d'oscillation 2 avant d'en ressortir par un conduit d'évacuation de gaz 24 qui est en communication fluidique avec la chambre d'oscillation 2.

On comprend donc qu'à partir d'un champ de vitesse symétrique en 2 dimensions dans la chambre 1, on crée un tourbillon dont la localisation (zones Z1 et Z2) va osciller avec une fréquence proportionnelle à la valeur du débit du fluide qui y circule. En plaçant des microphones ou des organes/capteurs de mesure de pression en dehors du conduit du fluide, au niveau des zones Z1 et Z2, typiquement au-dessus ou au-dessous des zones Z1, Z2 où se forment les tourbillons (i.e. les vortex), on peut mesurer la présence (ou non) d'une dépression du gaz et en déduire alors le débit de gaz qui circule dans le DOF.

L'ensemble du système, en particulier le conduit de liaison 3, la chambre de stabilisation 1, l'élément stabilisateur de flux 11, la chambre d'oscillation fluidique 2, l'élément à reflux 21 et le ou les capteurs de pression ou microphones, est compris dans un boitier protecteur, de préférence rigide, par exemple en polymère.

Par ailleurs, des moyens de pilotage et de traitement de signal (non montrés), telle une carte électronique à microprocesseur, par exemple un microcontrôleur, est reliée électriquement aux capteurs de pression ou microphones, de préférence des microphones, de manière à recueillir et exploiter les signaux de mesure de pression en extrayant la fréquence d'oscillation pour ensuite en déduire un débit de gaz. En fait, les microphones mesurent une onde sonore qui est une onde de pression.

Une source d'énergie, telle une batterie ou une pile électrique, permet d'alimenter en courant électrique, les moyens de pilotage et de traitement de signal.

La (ou les) valeur de débit mesurée peut être ensuite affichée, mémorisée et/ou télétransmise.

Dans le cadre de la présente invention, il a été montré qu'en choisissant une géométrie particulière, c'est-à-dire une forme spécifique, de l'élément stabilisateur de flux 11 agencé dans la chambre de stabilisation 1, on pouvait obtenir une stabilisation efficace du flux gazeux traversant le DOF dans une large plage de débit, typiquement jusqu'à 15 sL/min, tout en engendrant de faibles pertes de charge et ce, sans que ce soit au détriment de l'industrialisation du DOF, malgré sa taille réduite.

Plus précisément, il a été proposé d'adopter la géométrie représentée en Figures 1A/B, 2, 4 et 5 pour l'élément stabilisateur de flux 11, à savoir un élément stabilisateur de flux 11 de forme oblongue, c'est-à-dire allongée, avec deux extrémités opposées 11a, 11b effilée et symétrique selon deux plans P1, P2 de symétrie perpendiculaires l'un à l'autre. L'élément stabilisateur 11 doit être disposé dans le flux de manière à créer deux canaux 15 de part et d'autre de cet élément 11 de largeur radiale fixe égale à d et donc la courbe suit la forme effilée de l'élément stabilisateur 11 afin de guider le gaz dans le conduit 3. Ainsi, les parois latérales 14 sont construites à une distance radiale fixe égale à d de l'élément stabilisateur 11 pour créer les canaux 15.

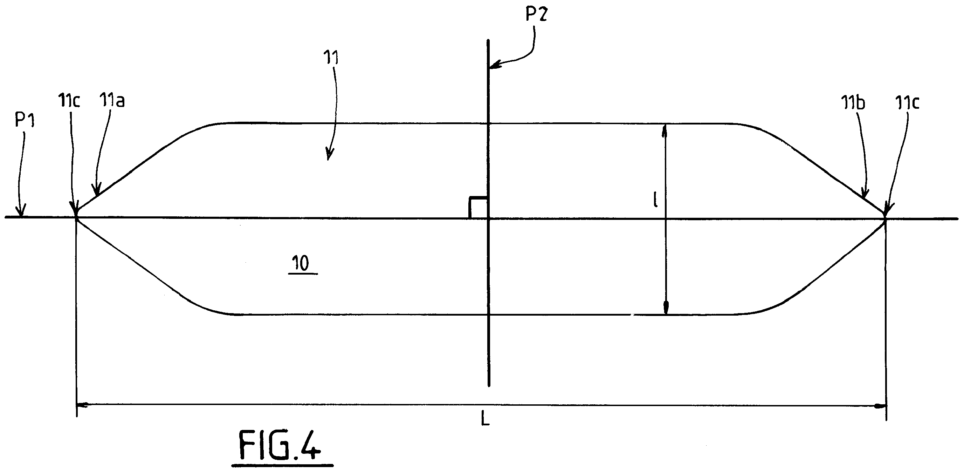

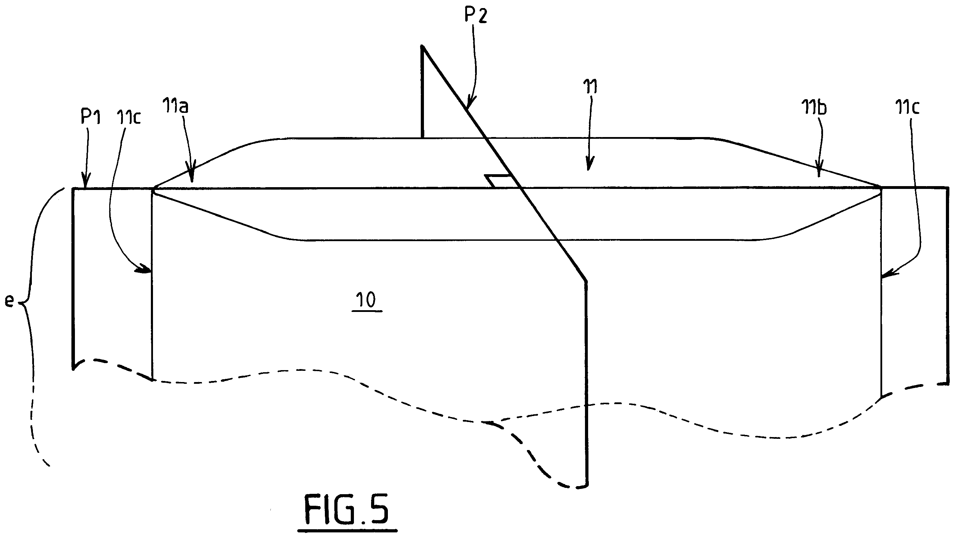

Comme détaillé sur les Figures 4 et 5, l'élément stabilisateur de flux 11 comprend un corps 10 :

- de section oblongue, c'est-à-dire ayant une longueur L très supérieure à sa largeur 1, typiquement L > 2.5 x 1.
- de hauteur e comprise entre environ 0.8 et 70 mm,
- présentant deux plans de symétrie P1, P2 perpendiculaires entre eux, comprenant un premier plan de symétrie P1 selon la longueur L et un second plan de symétrie P2 selon la largeur 1 dudit corps 10, et
- comprenant deux extrémités 11a, 11b terminales opposées, symétriques entre elles par rapport au plan P2 et effilées, en particulier pointues ou quasi-pointues, par exemple présentant une largeur se réduisant progressivement depuis la largeur 1 jusqu'à finir (vu en coupe) en une pointe ou quasi-pointe 11c, c'est-à-dire une pointe par exemple légèrement arrondie ou émoussée du fait de contraintes industrielles de fabrication, comme schématisé en

Figure 4. Considérées en trois dimensions (3D), les extrémités 11a, 11b terminales opposées forment en fait des arêtes. Les arêtes sont selon le premier plan de symétrie P1.

Des tests comparatifs opérés dans le cadre de la présente invention ont montré qu'une telle configuration conduisait à une stabilisation efficace du flux gazeux sur une large plage de débit, typiquement jusqu'à 15 sL/min, tout en réduisant la perte de charge subit par le gaz, lors de son passage dans le DOF.

Plus précisément, on a déterminé les pertes de charges (ΔP) en fonction du débit (Q), obtenues pour des DOF avec trois configurations connues (Design 1 à 3) de l'élément stabilisateur de flux et, à titre comparatif, la configuration (Design 4) selon l'invention, comme représenté sur les Figures 1A & B, 2, 4 et 5.

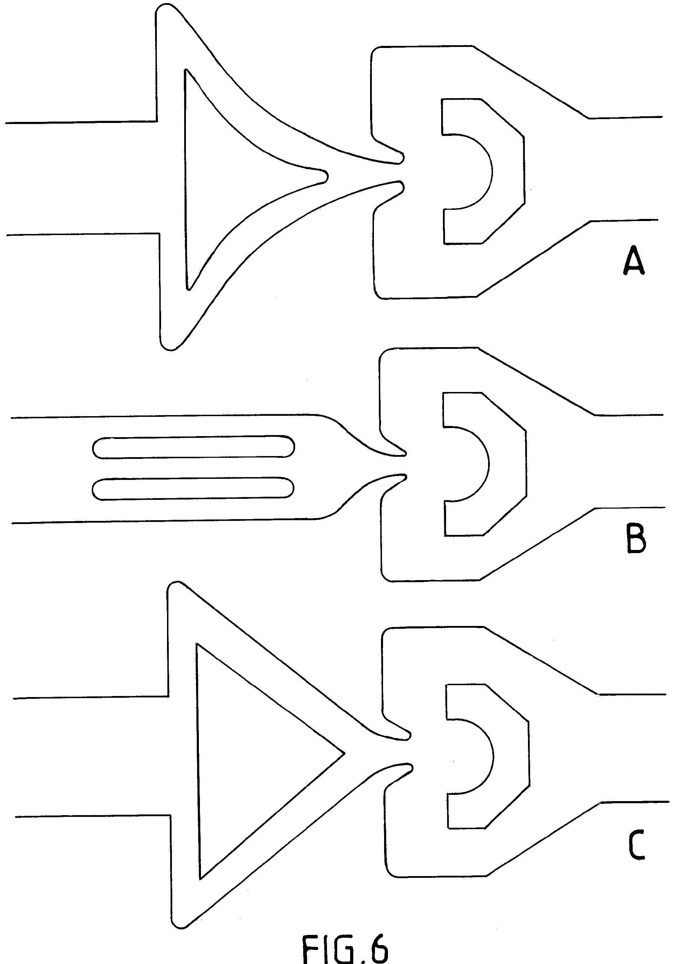

Les éléments stabilisateurs de flux testés sont montrés sur les Figures 4 et 5 (Design 4) selon l'invention et sur les Figures 6A-C selon l'art antérieur (Design 1 à 3), et listés dans le Tableau 1 ci-après.

Tableau 1

| Elément stabilisateur : | Courbe de Fig. 3 | FIG. n° |
|---|---|---|
| A section triangulaire à deux côtés concaves | Design 1 | 6A |
| Formé d'une pluralité d'ailettes | Design 2 | 6B |
| A section (quasi) triangulaire | Design 3 | 6C |
| Selon l'invention | Design 4 | 4 et 5 |

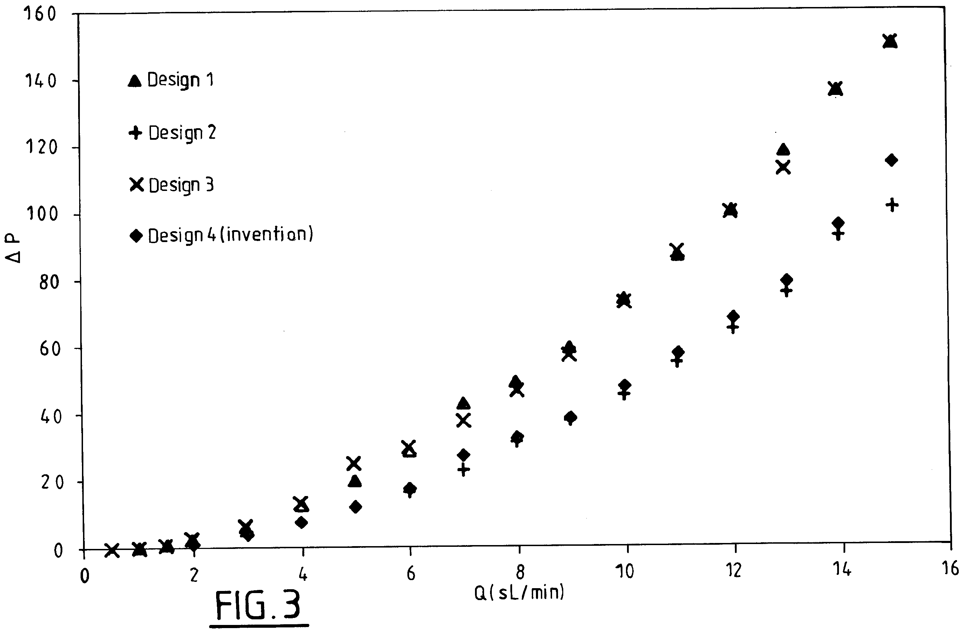

Les résultats obtenus sont représentés sous forme de courbes (Design 1 à 4) sur la Figure 3 qui illustrent les pertes de charge (ΔP) en fonction du débit (Q) pour chaque configuration testée. Comme on le voit, les meilleures performances en termes de pertes de charge sont obtenues pour les éléments stabilisateurs 11 correspondant au Design 2 à ailettes selon l'art antérieur et au Design 4 selon l'invention.

Toutefois, le Design 2 présente un inconvénient majeur, à savoir une industrialisation très difficile du fait de la complexité de l'élément stabilisateur à ailettes. Dès lors, seul l'élément stabilisateur 11 selon l'invention (Design 4) permet d'allier bonnes performances en termes de pertes de charge sur toute la plage testée, à savoir jusqu'à 15 sL/min, et de stabilisation du flux gazeux et, par ailleurs, industrialisation aisée du fait d'une forme peu complexe, donc aisée à fabriquer, notamment par moulage injection ou toute autre technique adaptée.

Ainsi, avec l'élément stabilisateur selon l'invention (Design 4), la largeur d (Fig. 1A et 1B) des canaux 15 de la chambre de tranquillisation 1 et du canal 3 reliant les deux chambres 1, 2, peut être réduite à moins de 1 mm, typiquement d'environ 0.8 mm, donc à une valeur autorisant une industrialisation, y compris d'un DOF de taille réduite, tout en maintenant les oscillations sur toute la plage de débit allant d'environ 0,5 à 15 sL/min.

La longueur de l'élément stabilisateur de flux 11 est importante. Elle doit être suffisamment longue devant sa largeur et devant la largeur des canaux 15. En effet, des essais réalisés dans le cadre de l'invention ont montré qu'une longueur trop courte de l'élément 11 ne permet pas une bonne stabilisation du flux en entrée de la chambre d'oscillation 2, ce qui génèrent des oscillations non maintenues, donc pas ou difficilement exploitables.

La Figure 7A représente un exemple de signal acoustique de différences des microphones placés au-dessus des zones Z1 et Z2 obtenu avec la géométrie de DOF selon la présente invention. Elle montre un comportement sinusoïdal maintenu. Au-dessous, l'analyse fréquentielle par transformée de Fourier montre un pic fin et de haute intensité associant une fréquence à chaque débit et un niveau de bruit faible.

D'autre part, la figure 7B montre les mêmes éléments pour une géométrie similaire à celle de l'invention, mais dont la longueur de l'élément stabilisateur est plus courte. Le signal acoustique montre, dans ce cas, que si les oscillations existent, elles ne sont pas maintenues. L'analyse fréquentielle confirme cette observation en montrant un niveau de bruit important dans les basses fréquences.

Ainsi, la géométrie proposée par la présente invention permet d'assurer un bon signal sur bruit, lors de la mesure des oscillations, et donc de permettre une mesure efficace d'un débit.

Par ailleurs, la Figure 8 montre une géométrie similaire à celle de l'invention mais dans laquelle l'élément 11 a été supprimé. Une telle géométrie ne permet pas de stabilisation efficace du flux de gaz et n'est donc pas exploitable pour la mesure de fréquence, et donc de débit. Ceci démontre la nécessité d'une bonne stabilisation du flux pour l'utilisation d'un oscillateur fluidique en tant que débitmètre.

Le Tableau 2 donne des exemples de dimensions et des plages de dimensionnement possibles d'un DOF selon la présente invention, en références aux Figures 1A et 1B.

Tableau 2

| Partie/élément du DOF des Figures 1A et 1B | Ref. sur Fig.1 | Distance (mm) | Plage possible (mm) |
|---|---|---|---|
| Hauteur de l'élément stabilisateur | e | 4 | 3d à 7d |
| Diamètre orifice d'entrée de chambre de tranquillisation | Din | 4.15 | 4d à 6d |
| Diamètre orifice de sortie de chambre d'oscillation | Dout | 2.8 | 3d à 6d |
| Largeur des canaux (dans chambre tranquillisation et canal de liaison) | d | 0.8 | 0.6 à 10 |
| Longueur totale de l'élément stabilisateur | L | 10.8 | 8d à 64d |
| Largeur élément stabilisateur | 1 | 2.55 | 3d à 20d |

(suite)

| Partie/élément du DOF des Figures 1A et 1B | Ref. sur Fig.1 | Distance (mm) | Plage possible (mm) |
|---|---|---|---|
| Distance bec / élément à reflux | H' | 1.33 | 1.25d à 2.5d |
| Profondeur (considérée selon le premier plan de symétrie P1) de partie cylindrique de l'élément à reflux | a | 1.4 | d à 2.5d |
| Largeur (considérée perpendiculairement au plan P1) de partie cylindrique de l'élément à reflux | b | 1.4 | d à 2.5d |
| Longueur des extrémités rectilignes de la partie cylindrique de l'élément à reflux | c | 0.5 | 0 à 3d |
| Distance entre les pieds du cylindre et les parois de la chambre d'oscillation leur faisant face | x | 2.4 | 3d à 12d |

D'une façon générale, un DOF selon l'invention peut être incorporé à un dispositif de suivi ou d'observance d'un traitement d'oxygénothérapie comprenant par ailleurs, au sein d'un même boitier, un ou plusieurs capteurs de pression, par exemple un capteur de pression absolue pour mesurer la pression ambiante, c'est-à-dire la pression atmosphérique, et un capteur de pression absolue pour mesurer la pression absolue dans la canule qui distribue le gaz respiratoire au patient, ce capteur étant placé en contact direct avec la canule, avant ou après le DOF selon l'invention.

Alternativement, un DOF selon l'invention peut aussi être incorporé à une prise de distribution de fluide agencée sur une paroi de bâtiment ou encore sur un récipient de gaz, telle une bouteille de gaz, notamment en aval d'un bloc détendeur.

## Revendications

1.  Débitmètre à oscillation fluidique comprenant, agencés en série, une chambre de stabilisation (1) et une chambre d'oscillation (2) reliées fluidiquement l'une à l'autre par un canal de liaison (3) ayant une largeur (d), la chambre de stabilisation (1) comprenant un élément stabilisateur de flux (11) et la chambre d'oscillation (2) comprenant un élément à reflux (21) comprenant une partie de forme semi-cylindrique (22), l'élément stabilisateur de flux (11) comprenant un corps d'élément (10) de section oblongue et présentant un premier et un deuxième plan de symétrie (P1, P2) perpendiculaires entre eux, ledit premier plan de symétrie (P1) étant selon la longueur (L) et ledit second plan de symétrie (P2) étant selon la largeur (1) dudit corps d'élément (10), et ledit corps d'élément (10) comprenant, en outre, deux extrémités (11a, 11b) de forme effilée (11c) et symétriques l'une de l'autre par rapport au deuxième plan de symétrie (P2), l'élément stabilisateur de flux (11) et la paroi périphérique (14) de la chambre de stabilisation (1) étant séparés par des canaux de largeur (d), **caractérisé en ce que** :

    - le corps d'élément (10) de section oblongue a une longueur (L) et une largeur (1) telles que : L > 2.5 x 1
    - l'élément stabilisateur de flux (11) a une longueur (L) comprise entre 1.8 mm et 300 mm, et une largeur (1) comprise entre 1.8 mm et 200 mm, et la largeur (d) du canal de liaison (3) et des canaux de la chambre de stabilisation (1) est inférieure ou égale à 10 mm.

2.  Débitmètre selon la revendication précédente, **caractérisé en ce que** les deux extrémités (11a, 11b) de forme effilée (11c) du corps d'élément (10) présentent une largeur se réduisant progressivement.

3.  Débitmètre selon l'une des revendications précédentes, **caractérisé en ce que** la largeur (d) du canal de liaison (3) et des canaux de la chambre de stabilisation (1) est :

    - soit inférieure ou égale à 1 mm,
    - soit comprise entre 1 et 10 mm.

4.  Débitmètre selon l'une des revendications précédentes, **caractérisé en ce que** le corps d'élément (10) de section oblongue a une hauteur (H) comprise entre 0.8 et 70 mm.

**5.** Débitmètre selon l'une des revendications précédentes, **caractérisé en ce que** l'élément stabilisateur de flux (11) est en matériau polymère

**6.** Débitmètre selon l'une des revendications précédentes, **caractérisé en ce que** l'élément stabilisateur de flux (11) est formé d'une pièce avec tout ou partie des parois délimitant la chambre de stabilisation (1).

**7.** Débitmètre selon l'une des revendications précédentes, **caractérisé en ce que** l'élément stabilisateur de flux (11) est espacé d'une distance (d) comprise entre 0.6 mm et 10 mm de la paroi périphérique (14) de la chambre de stabilisation (1).

**8.** Débitmètre selon l'une des revendications précédentes, **caractérisé en ce que** la largeur (d) du canal de liaison (3) reliant fluidiquement la chambre de stabilisation (1) à la chambre d'oscillation (2) et des canaux (15) de la chambre de stabilisation (1) est inférieure ou égale à 1 mm.

**9.** Débitmètre selon l'une des revendications précédentes, **caractérisé en ce que** la chambre d'oscillation (2) comprend des orifices de mesure de pression reliés à des microphones ou au moins un capteur de pression.

**10.** Débitmètre selon l'une des revendications précédentes, **caractérisé en ce que** la profondeur (a), considérée selon le premier plan de symétrie (P1), de partie cylindrique de l'élément à reflux et la largeur, considérée perpendiculairement au premier plan de symétrie (P1), de partie cylindrique de l'élément à reflux sont telles que :

- 0,8 mm < a < 25 mm, de préférence 1 mm < a < 2 mm et
- 0,8 mm < b < 25 mm, de préférence 1 mm < b < 2 mm.

**11.** Dispositif de suivi ou d'observance d'un traitement d'oxygénothérapie comprenant un débitmètre à oscillation fluidique selon l'une des revendications 1 à 10.

**12.** Prise murale de distribution de fluide comprenant un débitmètre à oscillation fluidique selon l'une des revendications 1 à 10.

FIG.1A

EP 3 527 955 A1

FIG.1B

EP 3 527 955 A1

FIG.2

EP 3 527 955 A1

FIG.3

EP 3 527 955 A1

EP 3 527 955 A1

FIG.4

FIG.5

FIG.6

Europäisches
Patentamt

European
Patent Office

Office européen
des brevets

## RAPPORT DE RECHERCHE EUROPEENNE

Numéro de la demande

EP 19 15 6699

| DOCUMENTS CONSIDERES COMME PERTINENTS | | | |
|---|---|---|---|
| Catégorie | Citation du document avec indication, en cas de besoin, des parties pertinentes | Revendication concernée | CLASSEMENT DE LA DEMANDE (IPC) |
| X | JP H06 109499 A (RICOH KK; RICOH ELEMEX CORP; RICOH SEIKI CO LTD) 19 avril 1994 (1994-04-19) * figures 2,6 * * alinéa [0019] * ----- | 1-12 | INV. G01F1/32 |
| A | JP H06 109500 A (RICOH KK; RICOH SEIKI CO LTD; RICOH ELEMEX CORP) 19 avril 1994 (1994-04-19) * figures 2,3 * ----- | 1-12 | |
| X | US 5 396 808 A (HUANG BAO T [FR] ET AL) 14 mars 1995 (1995-03-14) * figures 2,4,5 * * colonne 2, ligne 18 - ligne 20 * * colonne 8, ligne 5 - ligne 11 * ----- | 1-12 | |

DOMAINES TECHNIQUES
RECHERCHES (IPC)

G01F
F15C

Le présent rapport a été établi pour toutes les revendications

| Lieu de la recherche | Date d'achèvement de la recherche | Examinateur |
|---|---|---|
| La Haye | 31 mai 2019 | Stitou, Adel |

CATEGORIE DES DOCUMENTS CITES

X : particulièrement pertinent à lui seul
Y : particulièrement pertinent en combinaison avec un
autre document de la même catégorie
A : arrière-plan technologique
O : divulgation non-écrite
P : document intercalaire

T : théorie ou principe à la base de l'invention
E : document de brevet antérieur, mais publié à la
date de dépôt ou après cette date
D : cité dans la demande
L : cité pour d'autres raisons

.......................................................................

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 19 15 6699

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

31-05-2019

| Document brevet cité au rapport de recherche | Date de publication | Membre(s) de la famille de brevet(s) | Date de publication |
|---|---|---|---|
| JP H06109499       A | 19-04-1994 | JP      3140860 B2<br>JP   H06109499 A | 05-03-2001<br>19-04-1994 |
| JP H06109500       A | 19-04-1994 | AUCUN | |
| US 5396808        A | 14-03-1995 | AUCUN | |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 9322627 A

**Littérature non-brevet citée dans la description**

- Jet confiné, dispersions fluide-particules et mélange chaotique. **Y. LE GUER.** Engineering Sciences. Université de Pau et des Pays de l'Adour, 2005